# EUROPÄISCHE PATENTSCHRIFT

(11) **EP 1 032 749 B1**
(45) Veröffentlichungstag und Bekanntmachung des Hinweises auf die Patenterteilung: **05.06.2002**
(21) Anmeldenummer: 98962276.6
(22) Anmeldetag: 17.11.1998
(51) Int. Cl.: F01D 5/28, F01D 5/14, F01D 5/34

(54) **ROTOR MIT INTEGRALER BESCHAUFELUNG**
ROTOR WITH INTEGRATED BLADING
ROTOR A AUBES INTEGREES

(30) Priorität: 19.11.1997 DE 19751129
(43) Veröffentlichungstag der Anmeldung: 06.09.2000
(73) Patentinhaber: MTU Aero Engines GmbH, 80995 München (DE)
(72) Erfinder: ROSSMANN, Axel, D-85757 Karlsfeld (DE); SIKORSKI, Siegfried, D-80997 München (DE); KRÜGER, Wolfgang, D-85293 Reichertshausen (DE)
(74) Vertreter: Einsele, Rolf W.
(86) Internationale Anmeldenummer: DE9803375
(87) Internationale Veröffentlichungsnummer: WO9927234

(56) Entgegenhaltungen:
- EP-A- 0 764 763
- DE-A- 2 042 665
- US-A- 3 088 192
- US-A- 3 294 366
- US-A- 3 602 608
- US-A- 3 762 835
- US-A- 5 490 764

## Beschreibung

Die Erfindung betrifft einen Rotor mit integraler Beschaufelung, insbesondere für ein Triebwerk, an dem umfänglich und sich im wesentlichen radial erstrekkend Rotorschaufeln angeordnet sind.

Bekannte Fan-Rotorschaufeln aus faserverstärktem Kunststoff besitzen einen verhältnismäßig großen Durchmesser von z.B. 3,2 m und werden in Vollbauweise mit integriertem Schwalbenschwanzfuß oder in Hohlbauweise mit einem Innenstück, sog. Spar, gefertigt. Bei Schaufelblättern bringt der Einsatz von faserverstärktem Kunststoff anstelle von Metall den Vorteil einer erheblichen Gewichtseinsparung. Die beschriebene Bauweise ist jedoch nicht für kleinere Fan-Rotorschaufeln mit höheren Umfangsgeschwindigkeiten geeignet, da sie bei diesen der vorgeschriebenen Vogelschlagbeanspruchung nicht standhält. Um den Gewichtsvorteil dennoch zu nutzen, wird ein Schaufelblatt aus faserverstärktem Kunststoff in einer metallischen Haltegabel am Schaufelfuß befestigt. Diese Hybridbauweise hat den Nachteil, daß bei Vogelschlag mangels Duktilität zu große Teile der Kunststoffschaufelblätter abbrechen können und danach die erforderliche Notleistung vom Triebwerk nicht mehr erbracht werden kann. Zudem ist die zur Schaufelvorder- und Schaufelhinterkante offene Haltegabel torsionsweich. Ferner ist das Schaufelblatt nicht gegen Erosion geschützt.

Aus der DE-OS 20 42 665 ist eine Verdichterschaufel bekannt, die ein das Eintrittskantenprofilteil der Schaufel bildendes Metallteil und ein den übrigen Teil des Tragflächenprofils bildendes, Fasern enthaltendes Verbundteil umfaßt, wobei das Verbundteil in einer Nut des Metallteils aufgenommen ist und das Metallteil einen Schaft zur lösbaren Verbindung der Verdichterschaufel mit einem Laufrad aufweist.

Die DE 195 35 713 A 1 offenbart eine Verbundschaufel, bei denen die Hinterkante zur Verringerung von Materialverlusten an der Hinterkante abschnittsweise mit einer metallischen Ummantelung überdeckt ist.

Aus der DE 26 31 856 C2 ist eine Verdichterschaufel aus einem Verbundmaterial bekannt, bei der das Fasermaterial zumindest an der Vorderseite teilweise mit einem metallischen Kantenschutz geschützt ist, wobei die Verdichterschaufel einen Schwalbenschwanz zur lösbaren Befestigung an einem Rotor bzw. Läufer aufweist.

Die US 3,883,267 offenbart eine Schaufel für eine Gasturbine mit einem metallischen, kurvenförmig gestalteten Kern, um den ein Schaufelblattabschnitt aus faserverstärktem Material ausgebildet ist.

Aus der US 3,088,192 ist ein Verfahren bekannt, mit dem metallische Turbinenschaufeln und ein Träger aus einer Chrom-Legierung nach spezieller Ausbildung der Fügeflächen unter Einsetzen einer zwischen den Fügeflächen angeordneten Nickelschicht durch Diffusionsverbinden bei hohem Druck und hoher Temperatur zu einem integralen Bauteil verbunden werden.

Die Rotorschaufeln werden im allgemeinen lösbar an der Umfangsfläche eines Rotorträgers befestigt, z.B. mit einem Schwalbenschwanz. Dabei werden die im Betrieb auftretenden Schwingungen durch die Reibung zwischen dem Schwalbenschwanz am Schaufelfuß und der entsprechenden Nut in dem Rotorträger gedämpft. Bei integral beschaufelten Rotoren fehlt eine solche Dämpfung, so daß die im Betrieb auftretenden Schwingungen und die Kerbwirkung aufgrund von aufgetretenen Fehlstellen am Schaufelblatt, wie z.B. Rissen, ein Problem darstellen.

Der Erfindung liegt die Aufgabe zugrunde, einen Rotor mit integraler Beschaufelung der eingangs beschriebenen Gattung zu schaffen, bei dem die im Betrieb auftretenden Schwingungen verringert werden. Dazu soll die Beschaufelung auch ein möglichst geringes Gewicht aufweisen.

Die Lösung der Aufgabe ist erfindungsgemäß dadurch gekennzeichnet, daß die Rotorschaufeln einen metallischen Schaufelfuß, einen metallischen Schaufelblattabschnitt, der wenigstens einen Teil der Schaufelvorderkante und des daran angrenzenden Bereich der Fläche bildet, und ein Schaufelblatt aus faserverstärktem Kunststoff aufweisen.

Der Vorteil besteht darin, daß solche Rotorschaufeln durch den Einsatz von faserverstärktem Kunststoff einerseits deutliche Gewichtsvorteile gegenüber Metallschaufeln haben, andererseits durch den sich entlang wenigstens eines Teils der Schaufelvorderkante und des daran angrenzenden Bereichs der Schaufelfläche erstreckenden, metallischen Schaufelblattabschnitt eine erhöhte Duktilität sowie einen Schutz gegen Erosion aufweisen. Zudem besitzen die Rotorschaufeln eine gute Schwingungsdämpfung. Sie sind insbesondere im Nabenbereich aufgrund des metallischen Schaufelblattabschnitts robust und lassen sich bei einem erfolgten Bruch auf einfache Weise durch Austausch des Kunststoffschaufelblatts reparieren. Aufgrund der guten Dämpfung bei den erfindungsgemäß beschaufelten Rotoren, wie insbesondere Verdichterrotoren oder Fan-Rotoren, kann bei im Betrieb auftretenden Fehlstellen an den Schaufelblättern, z.B. Rissen, eine größere Kerbwirkung zugelassen werden. Infolgedessen muß ein Rotor bzw. dessen Rotorschaufel im Vergleich zu herkömmlichen Rotoren bei normalem Verschleiß seltener repariert werden.

Es ist bevorzugt, daß der metallische Schaufelblattabschnitt die Schaufelvorderkante radial innen am Schaufelfuß beginnend und mit Abstand zu einem radial äußeren Ende der Schaufelvorderkante bzw. der Schaufelfläche endend bildet. Auf diese Weise sind die Rotorschaufeln an dem an der Schaufelvorderkante liegenden Staupunkt der Strömung sowie an den sich beidseits daran anschließenden Bereichen der Schaufelfläche, die ebenfalls umströmt werden, geschützt.

Es ist ferner bevorzugt, daß der metallische Schaufelblattabschnitt einen Schlitz aufweist, in dem das Schaufelblatt aus faserverstärktem Kunststoff gehalten ist.

Es ist vorteilhaft, daß sich der Schlitz vollständig über einen Endabschnitt mit z. B. kurvenförmigem Verlauf von einem auf der Schaufelvorderkante liegenden, ersten Ende bis zu einem axial weiter hinten und mit Abstand zur Schaufelvorderkante liegenden, zweiten Ende des metallischen Schaufelblattabschnitts erstreckt.

Es kann zweckmäßig sein, daß das Schaufelblatt aus faserverstärktem Kunststoff durch Kleben und/oder Nieten an dem metallischen Schaufelblattabschnitt befestigt ist.

Weiterhin ist bevorzugt,, daß der Schaufelfuß und/oder der Schaufelblattabschnitt aus einer Titanlegierung bestehen.

Höchst bevorzugt sind eine Vielzahl von Fan-Rotorschaufeln an einer Verdichterscheibe umfänglich, äquidistant und sich im wesentlichen radial erstreckend unter Bildung einer integral beschaufelten Verdichterscheibe , sog. "Blisk", angeordnet. Die Fan-Rotorschaufeln werden dabei durch Reibschweißen od.dgl. an der Scheibe unter Bildung eines einstückigen Bauteils befestigt. Hierdurch wird Gewicht eingespart, was sich positiv auf die Dämpfung sowie die Größe der Drehzahlen auswirkt.

Bevorzugt ist ein umfänglich beschaufelter Rotorträger eine Verdichterscheibe, wobei dieser alternativ auch ein Verdichterring sein kann.

Weitere bevorzugte Ausgestaltungen der Erfindung sind in den Unteransprüchen beschrieben.

Im folgenden wird die Erfindung anhand eines Ausführungsbeispieles unter Bezugnahme auf eine Zeichnung näher erläutert. Es zeigt:
- Fig. 1: eine schematische Ansicht in perspektivischer Darstellung eines Ausführungsbeispiels des erfindungsgemäßen Rotors,
- Fig. 2: eine schematische Ansicht in perspektivischer Darstellung eines Ausführungsbeispiels einer Fan-Rotorschaufel des erfindungsgemäßen Rotors und
- Fig. 3: eine Schnittansicht der Fan-Rotorschaufel aus Fig. 2.

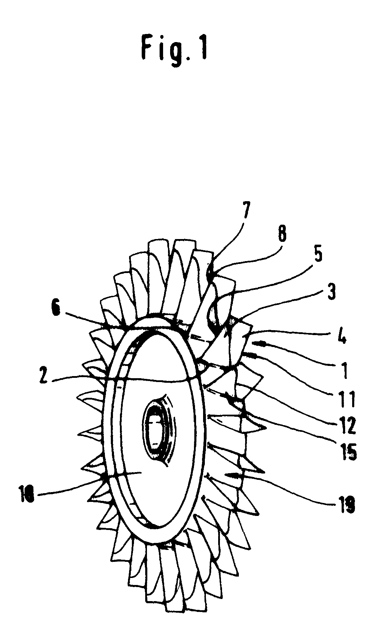

Fig. 1 zeigt ein Ausführungsbeispiel des erfindungsgemäßen Rotors, z.B. ein Verdichterrotor, mit integraler Beschaufelung für ein Flugtriebwerk, bei dem ein Rotorträger 18 eine Verdichterscheibe ist, an deren Umfangsfläche 19 eine Vielzahl von sich im wesentlichen radial erstreckenden Rotorschaufeln 1 befestigt sind. Die Rotorschaufeln 1 umfassen jeweils einen metallischen Schaufelblattabschnitt 3 und ein Schaufelblatt 4 aus faserverstärktem Kunststoff. Der metallische Schaufelblattabschnitt 3 und die Verdichterscheibe 18 können z.B. aus dem Vollen gefräst oder zunächst seperat hergestellt und dann durch ein geeignetes Verfahren integral miteinander verbunden werden. Dazu bietet sich u.a. Induktionsschweißen mit hochfrequentem Strom an, bei dem in der Fügeebene zwischen der Verdichterscheibe 18 und der Rotorschaufel 1 ein Schmiedegefüge entsteht.

Der metallische Schaufelblattabschnitt 3 bildet bei der Ausgestaltung gemäß Fig. 1 wenigstens einen Teil einer Schaufelvorderkante 5 und eines daran angrenzenden Bereichs einer Schaufefläche 15. Ein Endabschnitt 12 des metallischen Schaufelblattabschnitts 3 besitzt vorliegend einen kurvenförmigen Verlauf, der so ausgelegt ist, der auch bei einem Bruch und etwaigen Wegfall des Schaufelblatts 4 aus faserverstärktem Kunststoff eine vorgeschriebene Notleistung des Triebwerks gewährleistet ist.

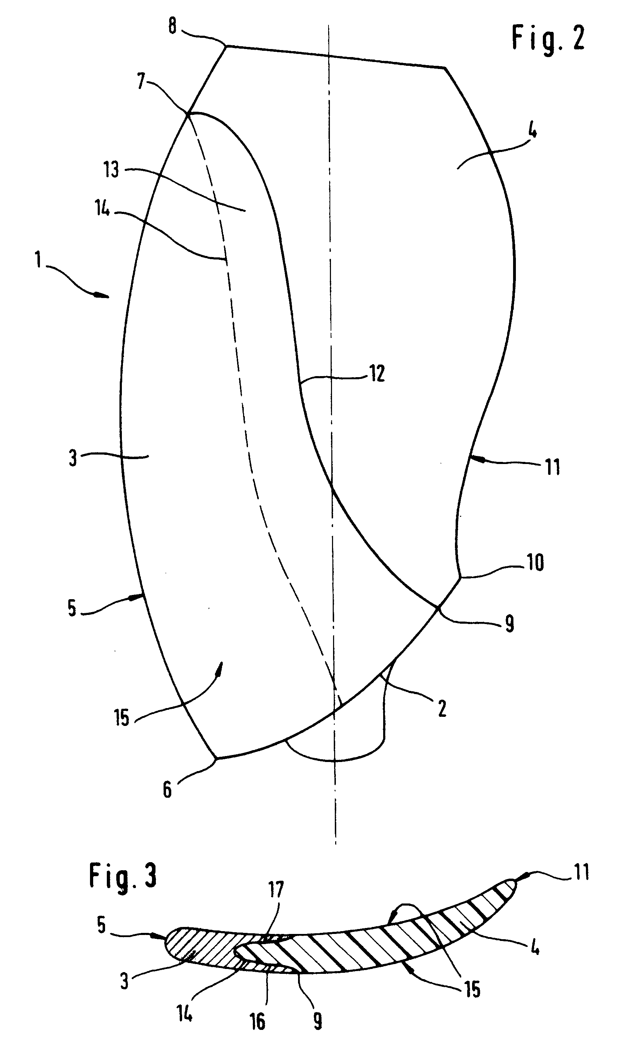

Fig. 2 zeigt eine im ganzen mit 1 bezeichnete Rotorschaufel in Hybridbauweise, die vorliegend eine Fan-Rotorschaufel eines Fan-Rotors ist und bspw. in einem Triebwerk mit einem Durchmesser von etwa 1,5 m eingesetzt wird. Die Fan-Rotorschaufel 1 besteht im wesentlichen aus einem metallischen Schaufelfuß 2, einem metallischen Schaufelblattabschnitt 3 sowie einem Schaufelblatt 4 aus faserverstärkten Kunststoff. Der Schaufelfuß 2 und der metallische Schaufelblattabschnitt 3 sind einstückig ausgebildet und bestehen aus einer Titanlegierung. Der Schaufelfuß 2 ist lediglich beispielhaft und wird bei der integralen Befestigung der Fan-Schaufeln 1 an einem Rotorträger 18 hinsichtlich seiner Form geeignet ausgebildet. Zur Verstärkung des Kunststoffschaufelblatts 4 lassen sich unterschiedliche Fasern, wie z.B. C-Fasern, Glasfasern oder Aramidfasern, verwenden.

Der metallische Schaufelblattabschnitt 3 bildet einen Teil einer Schaufelvorderkante 5, indem er sich von einem radial inneren Ende 6 der Schaufelvorderkante 5 , d.h. radial am Schaufelfuß 2 beginnend, bis zu einem ersten Ende 7 des Schaufelblattabschnitts 3 erstreckt, das mit Abstand zu einem radial äußeren Ende 8 der Schaufelvorderkante 5 bzw. der Schaufelfläche 15 endet. Der metallische Schaufelblattabschnitt 4 erstreckt sich vorliegend über ungefähr 9/10 der Länge der Schaufelvorderkante 5, wobei Versuche gezeigt haben, daß 2/3 der Länge der Schaufelvorderkante 5 ein bevorzugter Wert ist. Auf diese Weise wird die der Strömung zugewandte Schaufelvorderkante 5, an welcher der Staupunkt der die Fan-Rotorschaufel 1 umströmenden Strömung liegt, ausreichend gegen Erosion und Vogelschlag geschützt. Ferner ist die radiale Höhe des metallischen Schaufelblattabschnitts 3 so ausgelegt, daß selbst bei vollständig abgebrochenem Kunststoffschaufelblatt 4 das vorgeschriebene Betriebsverhalten des Triebwerks gewährleistet ist und eine Notleistung erbracht wird.

Wie in Fig. 2 zu erkennen ist, erstreckt sich der metallische Schaufelblattabschnitt 3 beginnend von dem radial inneren Ende 6 der Schaufelvorderkante 5 nicht über die gesamte Breite der Schaufelfläche 15 bis zu einem radial inneren Ende 10 einer Schaufelhinterkante 11, sondern endet mit Abstand dazu an seinem zur Schaufelvorderkante 5 beabstandeten, zweiten Ende 9.

Da der metallische Schaufelblattabschnitt 3 aus einer Titanlegierung besteht, besitzt die Fan-Rotorschaufel 1 eine ausreichende Duktilität und ist insbesondere bei Vogelschlag im Nabenbereich robust. Weil die Schaufelfläche 15 darüber hinaus überwiegend von dem Schaufelblatt 4 aus faserverstärkten Kunststoff mit einer Dichte von etwa 1,6 g/cm³ gebildet ist, während die Titanlegierung eine Dichte von etwa 4,5 g/cm³ aufweist, besitzt die Fan-Rotorschaufel 1 ein verhältnismäßig geringes Gewicht und ist auch für Triebwerke mit hohen Umfangsgeschwindigkeiten geeignet.

Ein sich zwischen dem ersten Ende 7 und dem zweiten Ende 9 des metallischen Schaufelblattabschnitts 3 erstreckende Endabschnitt 12 besitzt vorliegend einen kurvenförmigen Verlauf. Da die vorliegende Fan-Rotorschaufel 1 nach den üblichen Kriterien für Fan-Schaufeln ausgelegt wird, kann dieser Endabschnitt 12 auch einen daran angepaßten anderen Verlauf aufweisen. Es soll jedoch stets gewährleistet sein, daß der metallische Schaufelblattabschnitt 3 auch bei vollständigen Bruch und mithin Wegfall des Schaufelblatts 4 aus faserverstärktem Kunststoff eine vorgeschriebene Notleistung des Triebwerks gewährleistet.

Ein in Fig. 2 gestrichelt angedeuteter Fügebereich 13 ist in der Schnittansicht gemäß Fig. 3 deutlicher zu erkennen. Der Fügebereich 13 wird von einem Schlitz 14 in dem metallischen Schaufelblattabschnitt 3 gebildet, in den das Schaufelblatt 4 eingesetzt und durch Kleben oder ein anderes geeignetes Verbindungsverfahren befestigt ist. Die beiden Flanken 16, 17 des Schlitzes 14 können je nach Auslegung unterschiedlich lang sein. Der Schlitz 14 erstreckt sich von dem auf der Schaufelvorderkante 5 liegenden, ersten Ende 7 bis zum zur Schaufelvorderkante 5 beabstandeten, zweiten Ende 9 des metallischen Schaufelblattabschnitts 3 über die gesamte, im wesentlichen radial verlaufende Länge des metallischen Schaufelblattabschnitts 3. Das zweite Ende 9 des metallischen Schaufelblattabschnitts 3 kann je nach Anwendungsfall auch radial weiter außen oder auf der Schaufelhinterkante 11 liegen. Die am Beispiel der Fan-Rotorschaufel 1 beschriebene Merkmale gelten in gleicher Weise für alle anderen Rotorschaufeln.

## Patentansprüche

1. Rotor mit integraler Beschaufelung, insbesondere für ein Triebwerk, an dem umfänglich und sich im wesentlichen radial erstreckend Rotorschaufeln (1) angeordnet sind, **dadurch gekennzeichnet, daß** die Rotorschaufeln (1) einen metallischen Schaufelfuß (2), einen metallischen Schaufelblattabschnitt (3) und ein Schaufelblatt (4) aus faserverstärktem Kunststoff aufweisen, wobei der metallische Schaufelblattabschnitt (3) einen radial innen am Schaufelfuß (2) beginnenden und mit Abstand zu einem radial äußeren Ende (8) der Schaufelvorderkante (5) endenden Teil der Schaufelvorderkante (5) sowie einen Teil des daran angrenzenden Bereichs der Schaufelfläche (15) bildet, und wobei der von dem metallischen Schaufelblattabschnitt (3) gebildete Bereich der Schaufelfläche (15) so groß ist, daß bei abgebrochenem Schaufelblatt (4) aus faserverstärktem Kunststoff eine Notleistung vom Triebwerk erbracht wird.

2. Rotor nach einem oder mehreren der vorhergehenden Ansprüche, **dadurch gekennzeichnet, daß** der metallische Schaufelblattabschnitt (3) einen Schlitz (13) aufweist, in dem das Schaufelblatt (4) aus faserverstärktem Kunststoff gehalten ist.

3. Rotor nach einem oder mehreren der vorhergehenden Ansprüche, **dadurch gekennzeichnet, daß** sich der Schlitz (14) von einem auf der Schaufelvorderkante (5) liegenden, ersten Ende (7) bis zu einem zur Schaufelvorderkante (5) beabstandeten, zweiten En de (9) des metallischen Schaufelblattabschnitts (3) erstreckt.

4. Rotor nach einem oder mehreren der vorhergehenden Ansprüche, **dadurch gekennzeichnet, daß** das Schaufelblatt (4) aus faserverstärktem Kunststoff durch Kleben und/oder Nieten an dem metallischen Schaufelblattabschnitt (3) befestigt ist.

5. Rotor nach einem oder mehreren der vorhergehenden Ansprüche 1 bis 4, **dadurch gekennzeichnet ist, daß** das Schaufelblatt (4) aus faserverstärktem Kunststoff durch Klemmen an dem metallischen Schaufelabschnitt (3) befestigt ist.

6. Rotor nach einem oder mehreren der vorhergehenden Ansprüche, **dadurch gekennzeichnet, daß** der metallische Schaufelfuß (2) und/oder der metallischen Schaufelblattabschnitt (3) aus einer Titanlegierung bestehen.

7. Rotor nach einem oder mehreren der vorhergehenden Ansprüche, **dadurch gekennzeichnet, daß** ein mit den Rotorschaufeln (1) beschaufelter Rotorträger (18) eine Verdichterscheibe oder ein Verdichterring ist.

8. Rotor nach einem oder mehreren der vorhergehenden Ansprüche, **dadurch gekennzeichnet, daß** die Rotorschaufeln (1) mittels Induktionsschweißen mit hochfrequentem Strom unter Bildung eines Schmiedegefüges in der Fügeebene integral am Rotor befestigt sind.

## Claims

1. Rotor with integral blades, in particular for an engine, in which rotor blades (1) extending essentially radially are arranged round the circumference,
**characterised in that**
the rotor blades (1) have a metallic blade foot (2), a metallic vane section (3) and a vane (4) made from fibre-reinforced plastic, such that the metallic vane section (3) forms a part of the leading edge (5) of the blade that begins at the foot (2) of the blade and ends a distance away from a radially outer end (8) of the leading edge (5) of the blade, extending over part of the adjacent area of the blade surface (15), and such that the area of the blade surface (15) formed by the metallic vane section (3) is of sufficient size to provide emergency engine power in the event that the fibre-reinforced plastic vane (4) should break.

2. Rotor according to one or more of the preceding claims,
**characterised in that**
the metallic vane section (3) has a slot (13) in which the vane (4) made from fibre-reinforced plastic is held.

3. Rotor according to one or more of the preceding claims,
**characterised in that**
the slot (14) extends from a first end (7) located on the leading edge (5) of the blade to a second end (9) of the metallic vane section (3) some distance away from the leading edge (5) of the blade.

4. Rotor according to one or more of the preceding claims,
**characterised in that**
the vane (4) made from fibre-reinforced plastic is fixed to the metallic vane section (3) by adhesive bonding and/or riveting.

5. Rotor according to one or more of Claims 1 to 4,
**characterised in that**
the vane (4) made from fibre-reinforced plastic is fixed to the metallic vane section (3) by adhesive bonding.

6. Rotor according to one or more of the preceding claims,
**characterised in that**
the metallic blade foot (2) and/or the metallic vane section (3) consist of a titanium alloy.

7. Rotor according to one or more of the preceding claims,
**characterised in that**
a rotor support (18) bladed with the rotor blades (1) is a compressor disc or a compressor ring.

8. Rotor according to one or more of the preceding claims,
**characterised in that**
the rotor blades (1) are attached integrally on the rotor by means of induction welding with a high-frequency current, forming a forged structure in the joint plane.

## Revendications

1. Rotor à aubes intégrées, en particulier pour un groupe motopropulseur, sur lequel sont disposées, sur la périphérie et s'étendant sensiblement selon la direction radiale, des aubes de rotor (1), **caractérisé par le fait que** les aubes de rotor (1) présentent un pied métallique de l'aube (2), un tronçon métallique de la lame d'aube (3), et une lame d'aube (4) en matière plastique armée de fibres, le tronçon métallique de la lame d'aube (3) formant une partie du bord d'attaque de l'aube (5), commençant à l'intérieur, selon la direction radiale, sur le pied de l'aube (2) et se terminant à une certaine distance de l'extrémité extérieure (8), selon la direction radiale, du bord d'attaque de l'aube (5), ainsi qu'une partie de la zone de la surface de l'aube (15) qui jouxte le bord d'attaque, et la zone de la surface de l'aube (15) formée par le tronçon métallique de la lame d'aube (3) étant suffisamment importante pour que, si la lame d'aube (4), en matière plastique armée de fibres, se rompt, une puissance de secours soit fournie par le groupe motopropulseur.

2. Rotor selon une ou plusieurs des revendications précédentes, **caractérisé par le fait que** le tronçon métallique de la lame d'aube (3) présente une fente (13) dans laquelle est maintenue la lame d'aube (4) en matière plastique armée de fibres.

3. Rotor selon une ou plusieurs des revendications précédentes, **caractérisé par le fait que** la fente (14) s'étend depuis une première extrémité (7), située sur le bord d'attaque de l'aube (5), jusqu'à une seconde extrémité (9), située à distance du bord d'attaque de l'aube (5), du tronçon métallique de la lame d'aube (3).

4. Rotor selon une ou plusieurs des revendications précédentes, **caractérisé par le fait que** la lame d'aube (4), en matière plastique armée de fibres, est fixée, par collage et/ou rivetage, au tronçon métallique de la lame d'aube (3).

5. Rotor selon une ou plusieurs des revendications précédentes 1 à 4, **caractérisé par le fait que** la lame d'aube (4), en matière plastique armée de fibres, est fixée par pincement au tronçon métallique de la lame d'aube (3).

6. Rotor selon une ou plusieurs des revendications précédentes, **caractérisé par le fait que** le pied métallique (2) de l'aube et/ou le tronçon métallique de la lame d'aube sont constitués d'un alliage de titane.

7. Rotor selon une ou plusieurs des revendications précédentes, **caractérisé par le fait qu'**un porte-rotor ailette (18), avec les aubes de rotor (1), est un disque de compresseur ou une couronne de compresseur.

8. Rotor selon une ou plusieurs des revendications précédentes, **caractérisé par le fait que** les aubes de rotor (1) sont fixées intégrées au rotor par soudage par induction sous courant haute fréquence avec formation d'un joint ductile dans le plan de joint.
